## Europäisches Patentamt
## European Patent Office
## Office européen des brevets

(11) Publication number: **0 206 520**
**B1**

(12) **EUROPEAN PATENT SPECIFICATION**

(45) Date of publication of the patent specification:
**22.03.89**

(51) Int. Cl.⁴: **B 60 T 17/08**

(21) Application number: **86303851.9**

(22) Date of filing: **21.05.86**

(54) Improvements relating to brake actuators.

(30) Priority: **29.05.85 GB 8513533**

(43) Date of publication of application:
**30.12.86 Bulletin 86/52**

(45) Publication of the grant of the patent:
**22.03.89 Bulletin 89/12**

(84) Designated Contracting States:
**DE FR GB IT**

(56) References cited:
**DE-A- 1 555 116**
**FR-A- 1 465 672**
**GB-A- 2 030 651**
**GB-A- 2 067 666**
**US-A- 4 080 875**

(73) Proprietor: **LUCAS INDUSTRIES public limited company,
Kings Road, Tyseley Birmingham B11 2AH (GB)**

(72) Inventor: **Burns, Robert, Plas-Yn-Llysfaen, Llysfaen
Colwyn Bay CLWYD (GB)**
Inventor: **Adamson, John, 16 Oldfield Way, Heswall
Wirral Merseyside (GB)**

(74) Representative: **Stringer, David Hiram et al, W.P.
THOMPSON & CO Coopers Building Church Street,
Liverpool L1 3AB (GB)**

## Description

The present invention relates to a brake actuation system as described in GB-A-2.067.666 which corresponds to the pre-characterizing portion of Claim 1.

In particular the present invention relates to an actuator system of the type comprising an actuator controlled both by a service brake feature and a parking brake feature, the service brake feature being operable by pressure fluid and spring releasable, and the parking brake feature being spring operated to a brake-applied condition and releasable by pressure fluid.

With such a system the spring of the parking brake feature is pneumatically or hydraulically compressed during normal service braking. When the parking brake feature is activated, i.e. fluid pressure is released, the spring of the parking brake forces a piston in the parking brake feature towards the service brake feature so that a piston rod releasably connected to said piston, can engage and move a further piston, located in said service brake feature to compress the return spring of the service brake feature and hold the brakes applied. With the parking brake operative it is sometimes necessary to service the brakes, e.g. replace friction pads, and thus individual brakes must be releasable on the vehicle. In certain such actuation systems the parking brake may be released by disconnecting the piston rod from the piston in the parking brake feature, so that the spring on the service brake feature is released, thus releasing the brake.

This releasable connection between the piston rod and the parking brake piston can take the form of a number of balls which are engaged in radial bores which extend from an axial blind bore in the piston rod to the outside surface of the piston rod. The balls are of larger diameter than the length of the bores so that with a cylindrical actuator rod snugly, though axially movably located in said blind bore, the balls normally project beyond the outside surface of the piston rod and engage a shoulder on the piston, to thus lock the parking brake piston and piston rod together, in the available direction of movement of the piston rod for brake operation. The actuator rod is held in the locking position by suitably located springs. However, the actuator rod has an annular groove in its outer surface so that when the actuator rod is moved axially in said blind bore against the suitably located springs, in the available direction of movement of the piston rod for brake operation, the balls can transfer into the annular groove so that the piston rod and parking brake piston are disconnected and the parking brake is released. Subsequent pneumatic pressurisation of the parking brake feature moves the shoulder of the parking brake piston back past the said bores so that the suitably located springs can act upon the actuator rod to move the balls back to the locked position.

However, the problem arises with the above release connection in that as the actuator rod is moved axially in the direction of brake operation, and the parking brake is released as described hereabove, immediately the connecting between the parking brake piston and said piston rod is broken, the spring in the service brake feature is allowed to quickly expand, which together any strain energy contained in the brake linkage, forces said piston rod in the opposite direction, i.e. against the direction of movement of the actuator rod. In view of the size of the spring in the service brake feature, this release can be extremely dangerous to an operator especially if the actuator rod is moved manually.

It has previously been proposed that the actuator rod in the above described type of actuator system be operable via a Bowden cable and a remote lever control. With this arrangement the integrally constructed actuation system is mounted at one location and the remote lever control is mounted at a separate remote location, the flexible Bowden cable absorbing the kick-back of the released piston rod. However, this requires two separate mounting installations and a remote control.

The aim of the present invention is to provide an actuation system of the above described type, wherein the piston rod and parking brake piston, and thus the parking brake, can be released safely by means integrally formed on the actuation system.

According to the present invention there is provided an actuation system comprising an actuator controlled both by a service brake feature and a parking brake feature, the service brake feature being operably by pressure fluid and spring releasable, and the parking brake feature being spring operated to a brake-applied condition and releasable by pressure fluid, a piston in the parking brake feature being releasably connected to a piston rod which can engage and move a further piston in the service brake feature to compress a return spring in the service brake feature and hold the actuator in a brakes applied condition when the parking brake feature is spring operated to the brake-applied condition, an actuator rod being movable parallel to the axis of and relative to the piston rod, towards said further piston to release said piston from said piston rod, characterised in that a lever is pivotally mounted at a point along its length, on the said piston rod, and pivotally mounted at one end region thereof, on the actuator rod.

Preferably the other end region of the lever is connected to one end region of an elongate flexible member, e.g. one end region of a chain.

Thus by pulling on the chain, the lever is pivoted and the actuator rod moves relative to the piston rod in the braking direction, to release the parking brake, the kick-back of the piston rod when the service brake feature spring is released, being absorbed by the flexible chain. Further, for the lever to pivot in the required manner, the chain must be pulled in the opposite direction to the movement of the actuator rod. Thus an operator would be moving away from the kick-back as he operates the chain release. Rather than have the chain hanging loose, its free end region may be secured, for example, to the actuator system, the main criterion being that the chain is suspended clear of ground level or other restricted areas.

In a preferred embodiment of the present invention two pivotal levers are provided, each being pivotally connected both to the piston rod and the actuator rod, and the chain extending between the free end regions of the two levers.

The present invention will now be further described, by way of example, with reference to the accompanying drawings, in which:

Fig. 1 is a cross-sectional view of a known brake actuation system to which the present invention can be applied;

Fig. 2 is a cross-sectional view of part of the actuation system of Fig. 1, incorporating the present invention; and

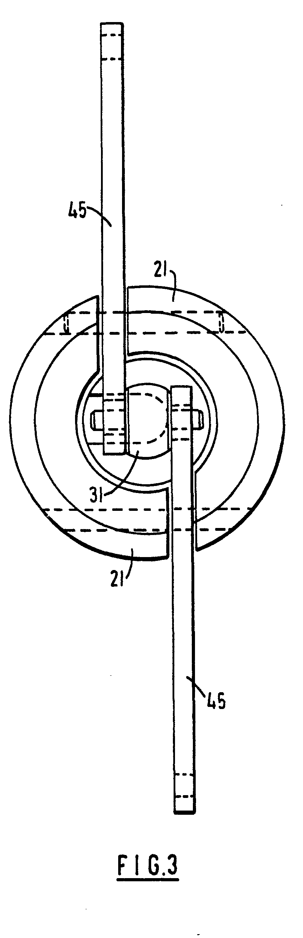

Fig. 3 is an end view of the chain release mechanism shown in Fig. 2.

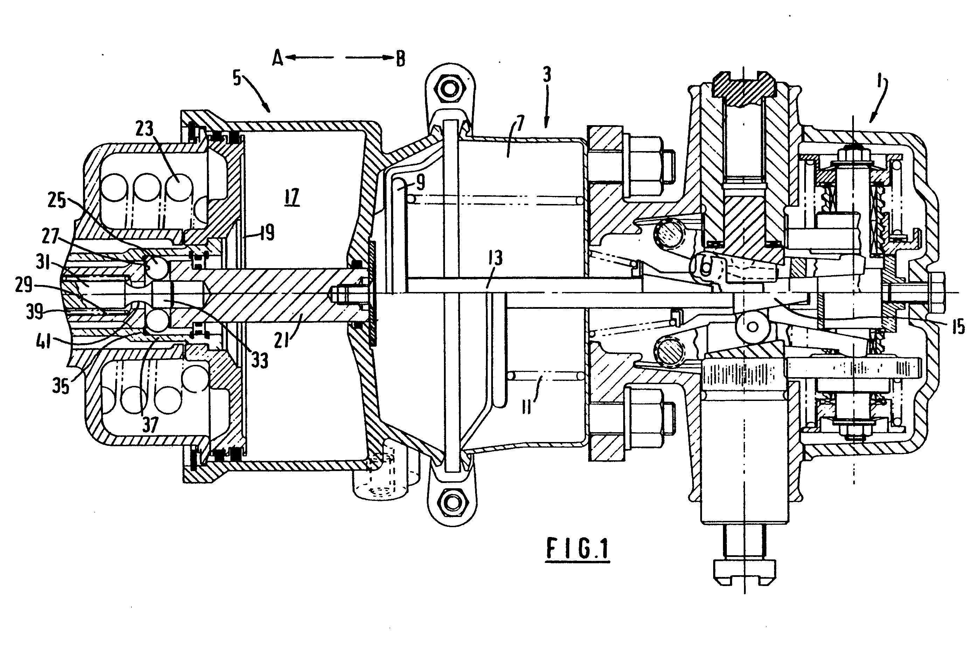

The brake actuation system shown in Fig. 1 comprises a wedge actuator 1 to which a service brake assembly 3 is attached, a parking brake assembly 5 being secured to the service brake assembly 3.

The service brake assembly 3 comprises a chamber 7 within which a piston 9 is movable under pneumatic pressure, against a spring 11. The piston 9 is connected by shaft 13 to a wedge 15 which operates the brakes (not shown) when pneumatic pressure is applied.

The parking brake assembly 5 comprises a chamber 17 within which a piston 19 is axially movable, the piston 19 being releasably connected to a piston rod 21 which extends through a wall of chamber 17 into chamber 7 of the service brake assembly 3. The piston 19 is movable away from the service brake assembly chamber 7 by pneumatic pressure, whence a spring 23 is compressed.

During normal service brake operation the chamber 17 of the parking brake assembly 5 is pressurised and the spring 23 is thus compressed; the service brake assembly 3 operating as desired, to move the wedge 15 back and forth. However, when the parking brake is to be applied, the chamber 17 of the parking brake assembly 5 is evacuated and spring 23 moves the piston 19 and piston rod 21 so that piston rod 21 engages the piston 9 in the service brake assembly 3, moving shaft 13 to operate the brakes via wedge 15. To normally release the parking brake the chamber 17 is pressurised.

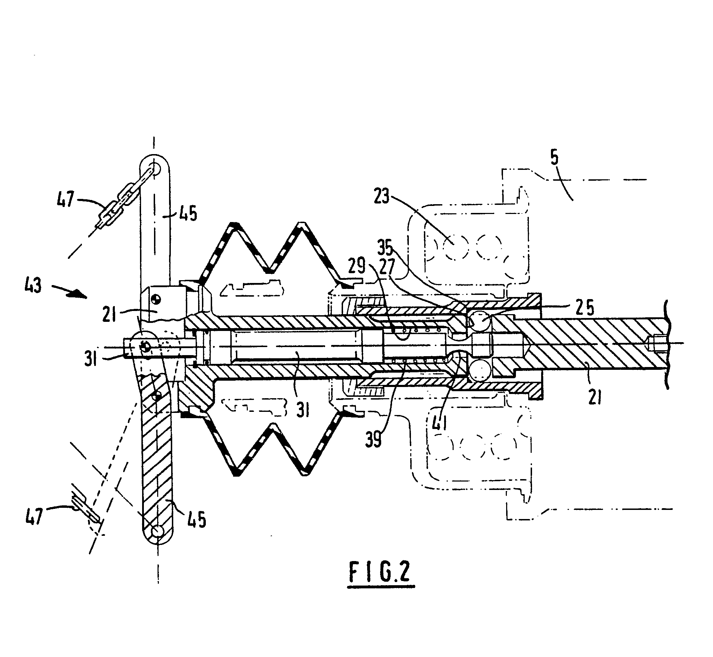

However, when maintenance is required, individual brakes have to be released. This means that a parking brake must be locally releasable by a maintenance person. The release is effected by disconnecting the piston rod 21 from the piston 19 in the parking brake assembly 5 so that the spring 11 in the service brake assembly 3 expands and releases the brakes. This releasable connection between the piston rod 21 and the piston 19 basically comprises a number of balls 25 each located in one of a series of radial bores 27 formed in the piston rod 21. The bores 27 extend from an axially extending blind bore 29 in the piston rod 21 to the surface of the piston rod 21, and balls 25 have a larger diameter than the length of each bore 27. Thus, with actuator rod 31 located in the blind bore 29 in the piston illustrated in Fig. 2, its cylindrical surface 33 holds the balls 25 so that they project beyond the surface of the piston rod and engage an annular shoulder 35 provided on an extension 37 of the piston 19. The piston 19 and piston rod 21 are thus locked together in respect of movement of the piston 19 in the braking direction B. To maintain the actuator rod 31 in this «locked position» relative to piston rod 21 suitably located springs 39 are provided which extend between a shoulder on the actuator rod 31 and a shoulder on the blind bore 29. An annular groove 41 is provided in the surface of the actuator rod 31 and if the actuator rod 31 is moved axially against the springs 39 then the balls 25 can transfer into the groove 41 being urged to do so by the effect of the service brake return spring and the angle of contact between the balls and the shoulder 35 releasing the piston rod 21 from the piston extension 37. The service brake spring 11 then moves shaft 13 and piston rod 21 in direction A, releasing the brakes.

To safely affect the movement of the actuator rod 31 relative to the piston rod 21 and avoid the kickback of the piston rod 21 when the spring 11 is released, a chain release mechanism 43 is provided.

This mechanism comprises two levers 45 which are each pivotally mounted both on the actuator rod 31 and the piston rod 21. A chain 47 is connected to the free end regions of the levers 45 and thus bully pulling on the chain 47 generally in direction A, the levers pivot, moving actuator rod 31 in direction B to thus release the brakes. The flexible chain 47 absorbs the above described kick-back and a further safeguard is that the operator moves in direction A, i.e., away from the actuation system and in the same direction as the piston rod kick-back, when operating the release mechanism.

In an alternative embodiment (not shown) of the present invention, only one lever 45 is provided, the free end of the chain being either loose or preferably secured to a part of the integral actuation system.

The present invention thus provides a simple and safe means for manually releasing the parking brake on, for example, a railway vehicle, wherein a brake actuation system of the above described type is installed.

## Claims

1. A brake actuation system comprising an actuator (1) controlled both by a service brake feature (3) and a parking brake feature (5), the service brake feature (3) being operable by pressure fluid and spring releasable, and the parking brake feature (5) being spring operated to a brake-applied condition and releasable by pressure fluid, a piston (19) in the parking brake feature (5) being releasably connected to a piston rod (21) which can engage and move a further piston (19) in the service brake feature (3) to compress a return spring (11) in the service brake feature (3) and hold the actuator (1) in a brakes applied condition when the parking brake feature (5) is spring operated to the brake-applied condition, an actuator rod (31) being movable parallel to the axis of and relative to the piston rod (21), towards said further piston (9) to release said piston (19) from said piston rod (21), characterised in that a lever (45) is pivotally mounted at a point along its length, on the said piston rod (21), and piviotally mounted at one end region thereof, on the actuator rod (31).

2. A system as claimed in claim 1, wherein one end region of an elongate flexible member (47) is connected to the free end region of the lever (45).

3. A system as claimed in claim 2, wherein the other end region of the elongate flexible member (47) is secured to a location remote from said system.

4. A system as claimed in claim 1, wherein two pivotal levers (45) are provided, each being pivotally connected both to the piston rod (21) and the actuator rod (31), with an elongate flexible member (47) extending between the free end regions of the two levers (45).

5. A system as claimed in claim 2, 3 or 4, wherein the flexible member is a chain (47).

### Patentansprüche

1. Bremsbetätigungssystem mit einer Betätigungseinrichtung (1), die sowohl durch eine Normal-Bremseinrichtung —(3) als auch eine Park-Bremseinrichtung (5) gesteuert wird, wobei die Normal-Bremseinrichtung (3) durch ein unter Druck stehendes Medium betätigbar und durch eine Feder freigebbar ist, während die Park-Bremseinrichtung (5) mittels einer Feder in die Bremsstellung bringbar und durch ein unter Druck stehendes Medium freigebbar ist, einem Kolben (19) in der Park-Bremseinrichtung (5), der abnehmbar mit einer Kolbenstange (21) verbunden ist, die mit einem weiteren Kolben (9) der Normal-Bremseinrichtung (3) in Eingriff bringbar ist und diesen bewegen kann, um eine Rückhol-Feder (11) in der Normal-Bremseinrichtung (3) zusammenzupressen und die Betätigungseinrichtung (1) in einem Zustand halten kann, in dem die Bremsen angelegt sind, wenn die Park-Bremseinrichtung (5) mittels der Feder in einen Zustand gebracht ist, in dem die Bremsen anliegen, einer Betätigungsstange (31), die parallel zu der Achse der Kolbenstange (21) und relativ zu dieser bewegbar ist und zwar in Richtung auf den genannten weiteren Kolben (9), um den Kolben (19) von der genannten Kolbenstange (21) freizusetzen, dadurch gekennzeichnet, daß ein Hebel (45) an einem Punkt seiner Längserstreckung drehbar auf der genannten Kolbenstange (21) befestigt ist und in einem Endbereich an der Betätigungsstange (31) angelenkt ist.

2. System nach Anspruch 1, wobei ein Endabschnitt eines langgestreckten elastischen Bauteiles (47) mit dem freien Endabschnitt des Hebels (45) verbunden ist.

3. System nach Anspruch 2, wobei der andere Endabschnitt des langgestreckten elastischen Teiles (47) an einem Ort befestigt ist, der entfernt vom System liegt.

4. System nach Anspruch 1, wobei zwei Schwenk-Hebel (45) vorgesehen sind, von denen jeder schwenkbar an der Kolbenstange (21) und der Betätigungsstange (31) befestigt ist, und sich ein langgestrecktes elastisches Teil (47) zwischen den beiden freien Endabschnitten der zwei Hebel (45) erstreckt.

5. System nach einem der Ansprüche 2, 3 oder 4, wobei das elastische Teil eine Kette (47) ist.

### Revendications

1. Système d'actionnement de frein, comprenant un actionneur (1) commandé par un dispositif de freinage en marche (3) pouvant être actionné par un fluide sous pression et relâché par ressort et le dispositif de freinage de parc (5) étant actionné par ressort jusqu'à une situation où le frein est appliqué, et pouvant être relâché par un fluide sous pression, un piston (19) du dispositif de freinage de parc étant connecté avec possibilité de séparation à une tige de piston (21) qui peut attaquer et déplacer un autre piston (9) placé dans le dispositif de freinage en marche (3) pour comprimer un ressort de rappel (11) du dispositif de freinage en marche (3) et maintenir l'actionneur (1) dans une situation où le frein est appliqué quand le dispositif de freinage de parc est commandé par ressort pour passer dans la situation où le frein est appliqué, une tige d'actionneur (31) étant déplaçable par rapport à la tige de piston (21) et parallèlement à l'axe de celle-ci, en direction dudit autre piston (9) pour désolidariser ledit piston (19) de ladite tige de piston (21), caractérisé en ce qu'un levier (45) est monté à pivot, en un point de sa longueur, sur ladite tige de piston (21), et monté à pivot, dans une de ses régions terminales, sur la tige d'actionnement (31).

2. Système selon la revendication 1, dans lequel une région terminale d'un organe flexible allongé (47) est connecté à la région terminale du levier (45).

3. Système selon la revendication 2, dans lequel l'autre région terminale de l'organe flexible allongé (47) est fixée en un point écarté dudit système.

4. Système selon la revendication 1, dans lequel deux leviers pivotants (45) sont prévus, chacun d'eux étant relié à pivot à la fois à la tige de piston (21) et la tige d'actionneur (31), avec un organe flexible allongé (47) s'étendant entre les extrémités terminales libres des deux leviers (45).

5. Système selon l'une des revendications 2 à 4, dans lequel l'organe flexible est une chaîne (47).

FIG.1

F I G.2

45

21

31

21

45

## F I G.3